# EUROPEAN PATENT APPLICATION

(11) **EP 4 368 491 A1**
(43) Date of publication of application: **15.05.2024**
(21) Application number: 23172317.2
(22) Date of filing: 09.05.2023
(51) Int. Cl.: B63G 8/00, B64U 10/14, B64U 50/19, B64U 80/70

(54) **CAPSULE FOR MOUNTING DRONE AND SUBMARINE SURVEILLANCE AND RECONNAISSANCE SYSTEM USING THE SAME**

(30) Priority: 01.11.2022 KR 20220143283
(71) Applicant: Defense Agency for Technology and Quality, Jinju-si, Gyeongsangnam-do 52851 (KR)
(72) Inventor: Kang, Hyun Jun, 52776 Gyeongsangnam-do (KR); Lee, Jun Ho, 52228 Gyeongsangnam-do (KR); Park, Dong Soo, 52853 Gyeongsangnam-do (KR)
(74) Representative: Eisenführ Speiser

(57) **Abstract**

Provided is a capsule for mounting a drone. The capsule for mounting a drone includes a body having a first space for accommodating a drone and a second space provided to surround at least a portion of the first space, a base portion provided in the first space so that a drone is mounted, and a valve provided in the body to open or close the second space so that external fluid is introduced into the second space.

## Description

### CROSS-REFERENCE TO RELATED APPLICATION

This application claims priority to and the benefit of Korean Patent Application No. 10-2022-0143283, filed on Nov. 01, 2022, the disclosure of which is incorporated herein by reference in its entirety.

### BACKGROUND

### 1. Field of the Invention

The present invention relates to a capsule for mounting a drone, in which optical information and global positioning system (GPS) information collected from a surface of water and in the air through a drone departing from the capsule, communication signals, and the like are transmitted to the submarine using a capsule for mounting a drone, which is launched in water from a submarine, and underwater surveillance and reconnaissance capability of a submarine can be improved by returning and cross-departing drones as necessary using the transmitted information, and a drone system of a submarine using the same.

### 2. Discussion of Related Art

Generally, drones have been developed for military purposes that perform missions such as aerial photography or aerial strikes through manual flight by remote control of a ground control system or autonomous flight using a global positioning system (GPS). With the gradual development of technology, various types of drones that can be deployed to areas inaccessible to humans, such as jungles, remote areas, volcanic areas, natural disaster areas, and nuclear power plant accident areas, are being developed.

Such drones have disadvantage of short operation time due to the capacity of batteries, and thus there is a limit in terms of operation time when the drones are operated for military operations at sea.

A technology for charging drones through a "wireless charging station for drones" is disclosed in Korean Patent Registration No. 10-2111054, but such a structure is difficult to use due to the risk of being exposed to enemies during operations at sea.

Further, underwater surveillance and reconnaissance usually involves underwater surveillance and reconnaissance by attaching a dipping sonar to a rotorcraft or surface ship, or underwater surveillance and reconnaissance by a submarine, but operations are limited in enemy territory because the location of the system may be exposed.

Underwater ships are a core weapon system of modern naval forces that conduct independent covert operations through submarines, and when detected by the enemy, their survivability is threatened, and thus exposure on the surface of the water needs to be minimized.

Therefore, there is a need for technology for conducting surveillance and reconnaissance of the enemy's submarine operation and the like without being detected by the enemy.

### SUMMARY OF THE INVENTION

The present invention is directed to providing a capsule for mounting a drone that can be moved freely in the air (above the water) and underwater using a drone departing from a submarine (mothership) in a safe area to rapidly perform surveillance and reconnaissance on an operational radius, and then return to a submarine (mothership) for rapid and safe wide-area surveillance and reconnaissance, and a submarine surveillance and reconnaissance system using the same.

According to an aspect of the present invention, there is provided a capsule for mounting a drone including a body having a first space for accommodating a drone and a second space provided to surround at least a portion of the first space, a base portion provided in the first space so that a drone is mounted, and a valve provided in the body to open or close the second space so that external fluid is introduced into the second space.

The capsule for mounting a drone may further include a charging unit provided in the first space and configured to charge a battery of the drone mounted on the base portion.

The base portion may be provided to be able to move up and down in the first space.

The body may further include a cover provided to be opened or closed so as to open the first space to the outside.

An antenna for communicating with the drone may be provided on the cover.

The body may further include one or more control wings provided to be unfolded.

The body may further include a thrust generating unit for generating a propulsive force under a surface of water.

According to another aspect of the present invention, there is provided a submarine surveillance and reconnaissance system including a submarine, and one or more capsules for mounting drones connected to the submarine, wherein each of the capsules for mounting drones includes a body having a first space for accommodating a drone and a second space provided to surround at least a portion of the first space, a base portion provided in the first space so that a drone is mounted, and a valve provided in the body to open or close the second space so that external fluid is introduced into the second space.

One or more drones to which predetermined missions are set may be accommodated inside the one or more capsules for mounting drones, and some drones of the one or more drones may have different missions from remaining drones.

The body may be connected to the submarine through a cable, and the cable may include a communication line and a power line.

The capsules for mounting drones may be accommodated inside the submarine or provided to be discharged to an outside of the submarine.

The body may further include a thrust generating unit for generating a propulsive force under a surface of water, and the thrust generating unit may be provided to operate when the capsules for mounting drones are discharged to the outside of the submarine.

The body may further include one or more control wings provided to be unfolded, the control wings may be provided to be selectively unfolded as necessary when the capsules for mounting drones are discharged to the outside of the submarine, and the body may be maintained level through the control wings so that only an antenna is exposed on the surface of water when the capsules for mounting drones are discharged to the outside of the submarine and the drone is separated from the capsules for mounting drones.

When the capsules for mounting drones are recovered to the submarine, the valve is opened and water may be introduced into the second space.

The body may further include a cover provided to be opened or closed so as to open the first space to the outside, an antenna for communicating with the drone and the submarine may be provided on the cover, and the body may be maintained level through the control wings so that only an antenna is exposed on the surface of water when the capsules for mounting drones are discharged to the outside of the submarine and the drone is separated from the capsules for mounting drones.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a schematic diagram of a submarine surveillance and reconnaissance system according to an embodiment of the present invention;
FIGS. 2 to 4 are schematic diagrams for describing a capsule for mounting a drone according to an embodiment of the present invention; and
FIGS. 5 and 6 are schematic diagrams for describing a submarine surveillance and reconnaissance system according to an embodiment of the present invention.

### DETAILED DESCRIPTION OF EXEMPLARY EMBODIMENTS

Hereinafter, exemplary embodiments of the present invention will be described in detail with reference to the accompanying drawings. Prior to this, terms and words used in this specification and claims should not be interpreted as limited to commonly used meanings or meanings in dictionaries and should be interpreted with meanings and concepts which are consistent with the technological scope of the invention based on the principle that the inventors have appropriately defined concepts of terms in order to describe the invention in the best way.

Further, the same or corresponding components are denoted by the same reference numerals regardless of reference numbers, and thus the description thereof will not be repeated. For convenience of description, the size and shape of each illustrated constituent member may be exaggerated or reduced.

Therefore, since the embodiments described in this specification and configurations illustrated in the drawings are only exemplary embodiments and do not represent the overall technological scope of the present invention, it should be understood that the present invention covers various equivalents, modifications, and substitutions at the time of filing of this application.

The present invention relates to a capsule for mounting a drone, in which optical information and global positioning system (GPS) information collected from a surface of water and in the air through a drone departing from the capsule, communication signals, and the like are transmitted to the submarine using a capsule for mounting a drone, which is launched in water from a submarine, and underwater surveillance and reconnaissance capability of a submarine can be improved by returning and cross-departing drones as necessary, and a drone system of a submarine using the same.

Hereinafter, specific descriptions of general components that can be mounted on drones, for example, components and sensors used for flight operation, wireless communication transceivers, etc. will be omitted, and devices used for flight operation may be applied.

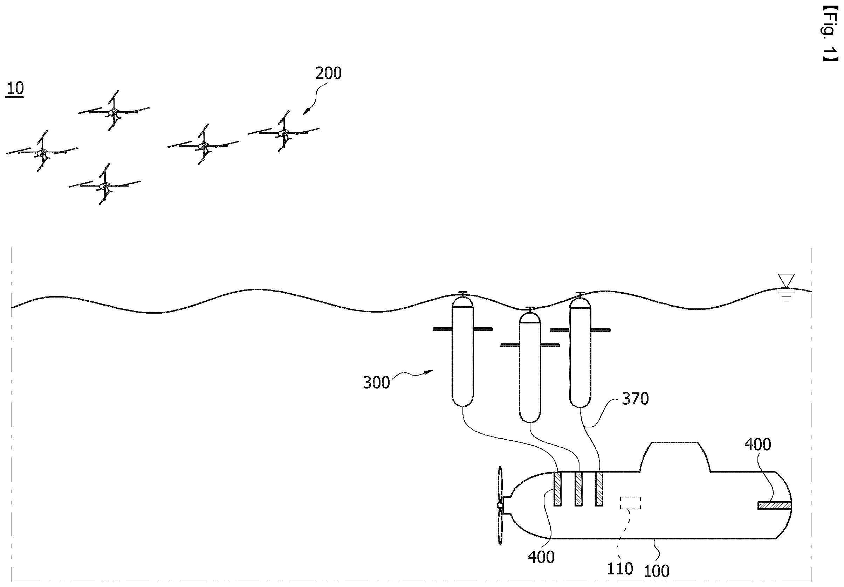

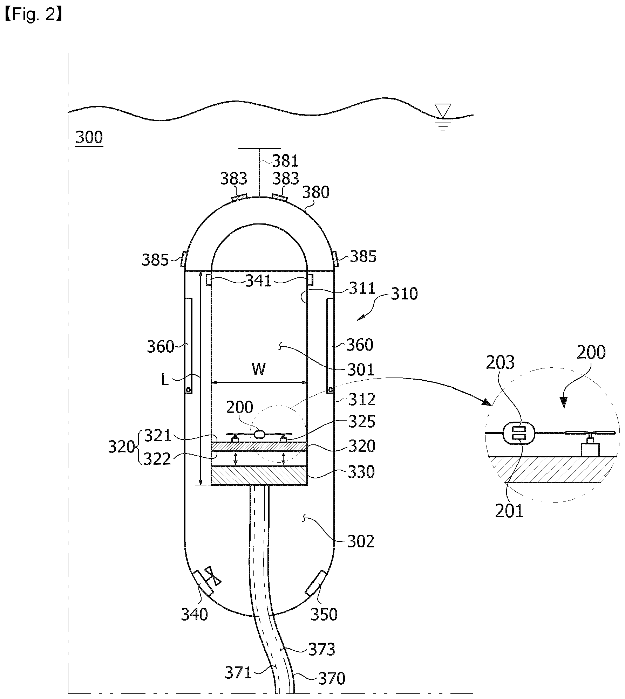

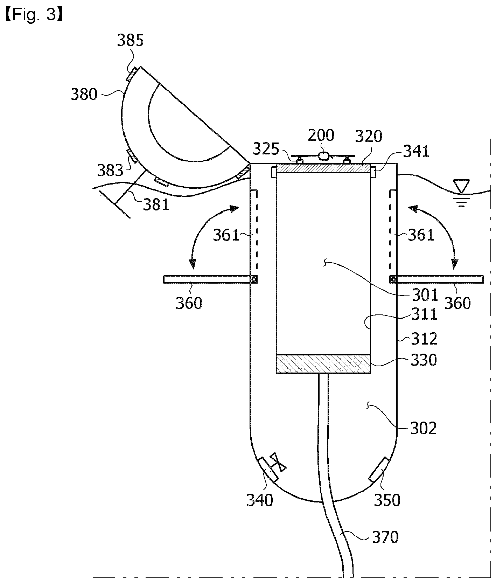

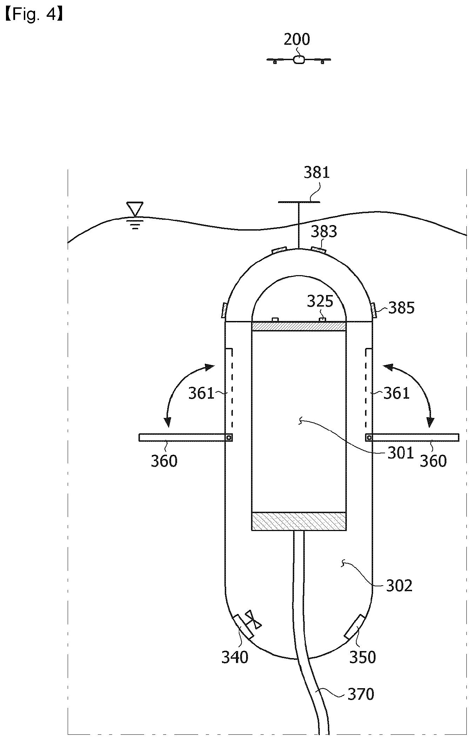

FIG. 1 is a schematic diagram of a submarine surveillance and reconnaissance system including a capsule for mounting a drone according to an embodiment of the present invention, and FIGS. 2 to 4 are schematic diagrams for describing the capsule for mounting a drone according to the embodiment of the present invention.

Referring to FIG. 1, a submarine surveillance and reconnaissance system 10 including the capsule for mounting a drone according to the embodiment of the present invention may include a submarine 100, drones (unmanned aerial vehicles) 200, and capsules 300 for mounting drones.

The drone 200 may include a battery 201 and a communication unit 203 for communication.

Capsule mounting portions 400 in which one or more capsules 300 for mounting drones are mounted may be provided in the submarine 100.

The capsule mounting portions 400 of the submarine 100 may be formed to have a size and number corresponding to those of the capsules 300 for mounting drones, but the present invention is not limited thereto.

Referring to FIGS. 2 to 4, the capsule 300 for mounting a drone according to the embodiment of the present invention includes a body 310 having a first space 301 for accommodating a drone and a second space 302 provided to surround at least a portion of the first space 301.

The first space 301 may be referred to as an "accommodation space" for accommodating a drone, and the second space 302 may be referred to as a "reservior space" provided to surround a partial region of the accommodation space.

The body 310 has a double housing structure, and may include an inner tub 311 and an outer tub 312 that is formed to surround the inner tub 311 and be spaced a predetermined interval from the inner tub.

The first space 301 may be a predetermined space provided in the inner tub 311.

The first space 301 may be provided to have a predetermined size to accommodate one or more drones 200 therein. For example, drones with the same mission set which will be described below may be disposed in one capsule. Drones may be grouped according to missions and accommodated inside the first space 301, but the present invention is not limited thereto.

The second space 302 may be formed between the inner tub 311 and the outer tub 312, and may be formed as an airtight air layer while being mounted on the capsule mounting portion 400.

Further, the body 310 includes a base portion 320 provided to allow the drone 200 to be mounted in the first space 301.

The base portion 320 may be provided so as to be able to move up and down (up and down movement) in a vertical direction L (longitudinal direction of the body) in the first space 301.

The vertical direction L (longitudinal direction of the body) may refer to a direction perpendicular to a sea level based on the sea level.

The base portion 320 may move up (rise) to be positioned at an upper end portion of the body when the drone is separated (departs) from the capsule. Further, when the drone returns to the capsule and the battery is recharged, the drone may move down to be positioned at a lower end portion of the body.

The base portion 320 may be formed to extend in a width direction W of the first space 301.

The width direction W may refer to a direction parallel to the sea level based on the sea level. Further, the width direction W may refer to a direction perpendicular to the vertical direction L.

The base portion 320 may include a first surface 321 on which the drone is mounted and a second surface 322 formed in an opposite direction of the first surface 321.

The base portion 320 may include fixing portions 325 that are formed on the first surface 321 to fix the drone 200.

Here, the fixing portions 325 may be provided to correspond to the number of drones accommodated in the first space 301.

The fixing portion 325 may be provided in the form of a clasp or claw in the form of a hook to engage and fix at least a portion of the drone. For example, the fixing portion 325 may be provided in the form of a clasp or claw in the form of a hook to engage and fix at least a portion of a landing gear or a boom (arm) (a portion connecting a body and propeller of a drone). However, the present invention is not limited thereto, and various means for fixing drones may be used.

In addition, the body 310 may include a charging unit 330 that is provided in the first space 301 to charge the battery 201 of the drone mounted on the base portion 320.

When the drone 200 dispatches from the capsule 300 for mounting a drone and then performs its mission and the battery runs down, the drone 200 may return to the capsule 300 for mounting a drone. In this case, the drone 200 is mounted on the base portion 320, and then the battery 201 of the drone 200 may be wirelessly charged through the charging unit 330.

More specifically, the charging unit 330 is provided to block at least a portion of a bottom surface of the first space 301. The charging unit 330 is provided to block at least a partial region of a bottom surface of the inner tub 311.

The base portion 320 may be provided at an upper side of the charging unit 330, and thus, when the base portion 320 moves down in the first space 301 and is brought into contact with the charging unit 330 or positioned adjacent to the charging unit 330, the battery 201 of the drone may be charged.

The charging unit 330 may be disposed to face the second surface 322 of the base portion 320, and thus, when the base portion 320 moves down so that the second surface 322 is brought into contact with the charging unit 330 or positioned adjacent to the charging unit 330, the battery of the drone may be charged.

In addition, the body 310 includes a valve 340 that is provided to open or close the second space 302 so that external fluid is introduced into the second space 302.

Here, one or more valves 340 may be provided. For example, when a plurality of valves are provided, fluid may be introduced into the second space 302 more rapidly.

Further, when the plurality of valves 340 are provided, the plurality of valves 340 may be disposed to be spaced a predetermined interval from each other.

In the state in which the capsule 300 for mounting a drone is mounted on the capsule mounting portion 400, the air for generating buoyancy may be injected into the second space 302 through an external air supply device (not shown) by opening one or more valves 340. The external air supply device (not illustrated) may be provided in the submarine 100, but the present invention is not limited thereto.

The second space 302 may be formed to have an airtight air layer, and when the capsule 300 for mounting a drone is discharged from the capsule mounting portion 400 into the water, the capsule 300 for mounting a drone rises toward the sea level in the water due to the buoyancy of the airtight air layer, and thus the capsule 300 for mounting a drone may be moved to the sea level more easily.

The one or more valves 340 may be provided in at least a portion of a lower side of the body 310. Further, a flow rate of the fluid introduced into the second space 302 may be adjusted by adjusting openings of the valves 340.

Specifically, the openings of the valves 340 may be adjusted after the drone departs from the capsule 300 for mounting a drone, so that seawater is introduced into the second space 302, and thus the capsule 300 for mounting a drone may be moved below the sea level by adjusting the buoyancy of the capsule 300 for mounting a drone.

As described above, by adjusting the flow rate of the fluid introduced into the second space 302 by adjusting the openings of the valves 340, the buoyancy may be adjusted so that only the antenna 381 of the capsule 300 for mounting a drone is exposed above the sea level.

The valves 340 may be provided so that the openings of the valves are automatically adjusted or the openings are adjusted by the user through electronic control, but the present invention is not limited thereto.

A filter (not illustrated) may be further included on an inlet of the valve 340 to prevent floating matter from being introduced when external fluid (seawater) is introduced into the second space 302.

A filtering member in the form of a mesh may be installed in the filter, and the innocuous impurity and the floating matter may be removed from the seawater that has passed through the filter, and thus clogging of the inlet of the valve can be prevented. Therefore, the seawater from which the innocuous impurity and the floating matter are removed is smoothly introduced into the second space 302.

In particular, an air injection unit 341 for injecting gas into the second space 302 to adjust the buoyancy may be provided in the body 310.

One or more air injection units 341 are means that are provided at an upper side of the body 310 to inject the air. For example, the air injection unit 341 may include an air compressor.

The air compressor is a component that generates compressed air by suctioning and compressing outside air, and the air compressor may be provided on the upper end portion of the body 310. When the upper end portion of the body 310 rises from the sea level, the air compressor may suction the outside air to generate the compressed air, and may supply the generated air to the second space 302 to adjust buoyancy.

Therefore, when the air is supplied to the second space 302 through the air injection unit 341, the seawater introduced into the second space 302 may be discharged to the outside by selectively adjusting the openings of the valves 340.

The air injection unit 341 may be provided in at least a portion of an upper end portion of an inner circumferential surface of the inner tub 311, or may be provided in at least a portion of an upper end portion of and outer circumferential surface of the inner tub 311. Accordingly, when a cover 380 is opened on the surface of the water, the outside air may be suctioned, the compressed air may be generated, and the compressed air may be injected into the second space 302.

In addition, the body 310 includes a thrust generating unit 350 for generating a propulsive force under the surface of the water (underwater).

One or more thrust generating units 350 may be provided in at least a portion of a lower side of the body 310.

The thrust generating unit 350 is a means for additionally generating buoyancy when the capsule 300 for mounting a drone is discharged from the submarine 100 to the outside. For example, the thrust generating unit 350 may include a gas generating device or a water jet.

When the thrust generating unit 350 is provided as a gas generating device, an amount of vertical movement of the capsule 300 for mounting a drone may be adjusted according to the capacity of the gas generating device.

Further, when the thrust generating unit 350 is provided as a water jet, the water may be suctioned by the rotating impeller, the thrust may be generated using the water jet formed by spraying the suctioned water through the nozzle, and thus an amount of vertical movement of the capsule 300 for mounting a drone may be adjusted.

Meanwhile, the body 310 includes one or more control wings 360 provided to be unfolded.

The control wings 360 may be used to additionally adjust the buoyancy of the body 310 of the capsule for mounting a drone so that only the antenna 381 is exposed above the sea level after the capsule 300 for mounting a drone is launched from the submarine 100.

A control wing mounting groove 361 in which one or more control wings 360 are mounted may be provided in the body 310.

The control wing mounting groove 361 may be formed to be recessed inward from an outer circumferential surface of the outer tub 312 of the body 310 so that the control wings 360 may be inserted into the control wing mounting groove 361.

Therefore, in the state in which the control wings 360 are inserted into the control wing mounting groove 361, outer circumferential surfaces of the control wings 360 are coplanar with the outer circumferential surface of the outer tub 312 of the body 310.

Further, the control wings 360 may be rotated to have a substantially right angle with the outer circumferential surface of the outer tub 312 in an unfolded state.

The control wings 360 may be connected to a rotation shaft and a motor(not shown), and may be provided to be rotatable in the unfolded state.

The control wings 360 may be unfolded and maintained in a fixed state by selectively adjusting the angle as necessary so that the body 310 can be maintained in a horizontal and vertical state in the water, or the control wings 360 may be rotated in the unfolded state.

For example, in order to maintain a horizontal state in the unfolded state of the control wings 360, the control wings 360 may be provided by being repeatedly moved in a vertical direction or repeatedly moved in left and right directions and rotated so that the body is maintained in a horizontal state in water.

Accordingly, the body 310 may be maintained in a horizontal state at a predetermined location in water so that only the antenna 381 may be exposed above the surface of the water.

Meanwhile, the capsule 300 for mounting a drone further includes a cable 370 electrically connected to the submarine 100.

Specifically, the body 310 may be electrically connected to the submarine 100 through the cable 370.

Here, the cable 370 may include a communication line 371 and a power line 373.

Power may be supplied from the submarine to the charging unit 340 through the power line 373 of the cable 370.

The submarine 100 and the capsule 300 for mounting a drone may be connected through the cable 370, and when the drone 200 departs from the capsule 300, a part of the cable 370 may be pulled in the submarine 100 so that the capsule 300 may be moved from the surface of the water into the water.

Further, the cable 370 may be pulled from the submarine 100 and returned to the submarine 100. Accordingly, the capsule 300 may be moved underwater or in the submarine so as not to be exposed to enemies.

One end portion of the cable 370 may be connected to the submarine 100, and another end portion may be connected to the capsule 300 for mounting a drone. The one end portion of the cable 370 may be recovered (pulled) toward the submarine 100 after the drone 200 departs from the capsule 300, to allow the capsule 300 to move underwater or be recovered to the submarine 100.

Meanwhile, the body 310 includes a cover 380 provided to be opened or closed so as to open the first space 301 to the outside.

The cover 380 may face the first surface 321 of the base portion 320.

The antenna 381 for communicating with the drone 200 may be provided on the cover 380.

The antenna 381 may be provided on an upper end portion of the cover 380 to serve as a communication relay between the underwater submarine 100 and the drone 200 after the drone 200 departs (or leaps) from the capsule 300.

The antenna 381 may communicate with the communication unit 203 of the drone 200, and communicate with the submarine 100.

Further, the cover 380 may include one or more first water detection sensors 383 and one or more second water detection sensor 385 that detect water. The first water detection sensors 383 and the second water detection sensors 385 may be mounted on an outer circumferential surface of the cover 380 so as to be exposed to the outside, and may be exposed to the outside air while the cover 380 is exposed on the surface of the water.

The first water detection sensor 383 may be installed outside the cover to be exposed, and may be operated when the water is detected, and may transmit a first detection signal to a control unit 110 provided on the submarine 100.

In particular, the first water detection sensor 383 may be positioned on an upper end portion of the outer circumferential surface of the cover 380, and whether the upper end portion of the cover is located in water or exposed above the surface of the water may be determined through the first water detection sensor 383.

Therefore, only the antenna 381 may be exposed above the surface of the water through the first water detection sensor 383.

When the first detection signal is received from the first water detection sensor 383, it is determined that the upper end portion of the cover is located in water, and the body 310 may be maintained level through the control wings 360 so that only the antenna 381 may be exposed above the surface of the water.

Further, the second water detection sensor 385 may be installed outside the cover to be exposed, and may be operated when the water is detected, and may transmit a second detection signal to the control unit 110 provided on the submarine 100.

The second water detection sensor 385 may be positioned on a lower end portion of the outer circumferential surface of the cover 380, and whether the lower end portion of the cover is located in water or exposed above the surface of the water may be determined through the second water detection sensor 385.

Therefore, it is possible to select whether to open or close the cover 380 through the second water detection sensor 385 in order to allow the drone 200 accommodated in the first space 301 of the body to depart to the outside.

The control unit 110 may control the cover 380 to be opened in the state in which the second water detection sensor 385 does not detect water, and control the cover 380 to be remain closed in the state in which the second water detection sensor 385 detects water. That is, the control unit 110 may control the opening of the cover 380 to be restricted in the state in which the second water detection sensor 385 detects water.

The control unit 110 may control opening of the cover 380 to be limited when the second detection signal is received from the second water detection sensor 385, and control the cover 380 to be opened when the second detection signal is not received.

Here, the first and second water detection sensors 383 and 385 may measure the depth of water (water level) to measure the water level from the first and second detection signals, and the control unit 110 may control opening or closing of the cover 380 according to the measured water level.

Therefore, the control unit 110 may control the control wings 360 so that only the antenna 381 is exposed above the surface of the water according to the water level measured from the first detection signal.

Further, the control unit 110 may control the opening or closing of the cover 380 to open the cover 380 or limit the opening of the cover 380 according to the water level measured from the second detection signal.

Meanwhile, a submarine surveillance and reconnaissance system 10 using a capsule 300 for mounting a drone according to an embodiment of the present invention includes a submarine 100, and one or more capsules 300 for mounting drones connected to the submarine.

One or more drones 200 may be included inside the one or more capsules 300 for mounting drones connected to the submarine 100.

The capsule 300 for mounting a drone includes a body 310 having a first space 301 for accommodating a drone and a second space 302 provided to surround at least a portion of the first space 301, a base portion 320 provided in the first space so that the drone 200 is mounted, and a valve 340 provided in the body 310 to open or close the second space 302 so that external fluid is introduced into the second space 302.

A control unit 110 which is provided to control opening or closing of a cover 380 of the capsule 300 for mounting a drone, driving of control wings 360, opening or closing and an opening degree of the valve 340, driving of a thrust generating unit 350, and vertical movement of the base portion 320 may be provided in the submarine 100.

Hereinafter, the same configuration described above in the capsules 300 for mounting drones may be applied, and the same content thereof will be omitted.

The capsule 300 for mounting a drone may be accommodated inside the submarine 100 or may be provided to be discharged to the outside of the submarine 100.

Specifically, the submarine 100 may include a capsule mounting portion 400 on which the capsule 300 for mounting a drone is mounted.

When the capsule 300 for mounting a drone is discharged from the submarine 100 to the outside, the control wings 360 may be provided to be selectively unfolded.

When the capsule 300 for mounting a drone is discharged from the submarine 100 to the outside and the drone 200 is separated from the capsule 300, the capsule 300 for mounting a drone may be provided to be maintained in a horizontal and vertical state through the control wings 360 so that only an antenna 381 is exposed above the surface of the water.

In this document, the vertical state means a state in which the longitudinal direction of the body is perpendicular to the sea level.

Specifically, the capsule 300 for mounting a drone is discharged from the submarine 100 to the outside and moved toward the surface of the water so that the cover 380 is exposed above the surface of the water, and then the control unit 110 opens the cover 380 to allow the drone 200 accommodated therein to depart, and closes the cover 380 to seal the first space 301.

Thereafter, the control wings 360 are unfolded so that only the antenna 381 is exposed above the surface of the water, and the body 310 is maintained in a horizontal and vertical state while being located at a predetermined location underwater (underwater adjacent to the sea level).

In the state in which the capsule 300 for mounting a drone is discharged from the submarine to the outside, when the antenna 381 is used as a communication relay between the drone 200 and the submarine 100, the control unit 110 may selectively drive the control wings 360 to control the capsule 300 for mounting a drone to be maintained in a horizontal and vertical state.

Here, opening or closing of the cover 380 of the capsule 300 for mounting a drone may be controlled through the first and second water detection sensors 383 and 385 described above.

In addition, when the capsule 300 for mounting a drone is recovered to an inside of the submarine 100, the valve 340 may be opened and water may be introduced into the second space 302.

Specifically, after the drone 200 has performed all of its missions and is recovered to the inside of the capsule 300 for mounting a drone, and when the capsule 300 for mounting a drone is recovered to the inside of the submarine 100, the valve 340 may be opened and water (seawater) may be introduced into the second space 302, and thus the capsule 300 for mounting a drone may be more easily and rapidly recovered to the submarine 100 by reducing buoyancy of the capsule 300 for mounting a drone.

When only the antenna 381 is exposed above the surface of the water, the control unit 110 may selectively drive the control wings and at the same time, control the water to be introduced into the second space 302 by adjusting the opening of the valve 340, and thus the control unit 110 may move the capsule into the water rapidly by reducing the buoyancy of the capsule, and at the same time, the capsule may be maintained in a horizontal and vertical state at a predetermined location by driving the control wings 360.

One or more drones 200 for which predetermined missions are set may be accommodated inside each of the one or more capsules 300 for mounting drones.

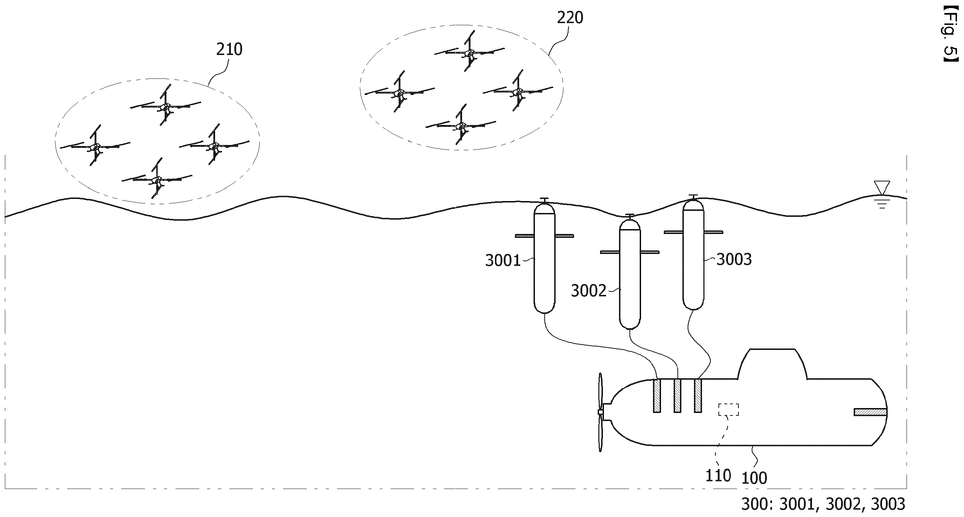

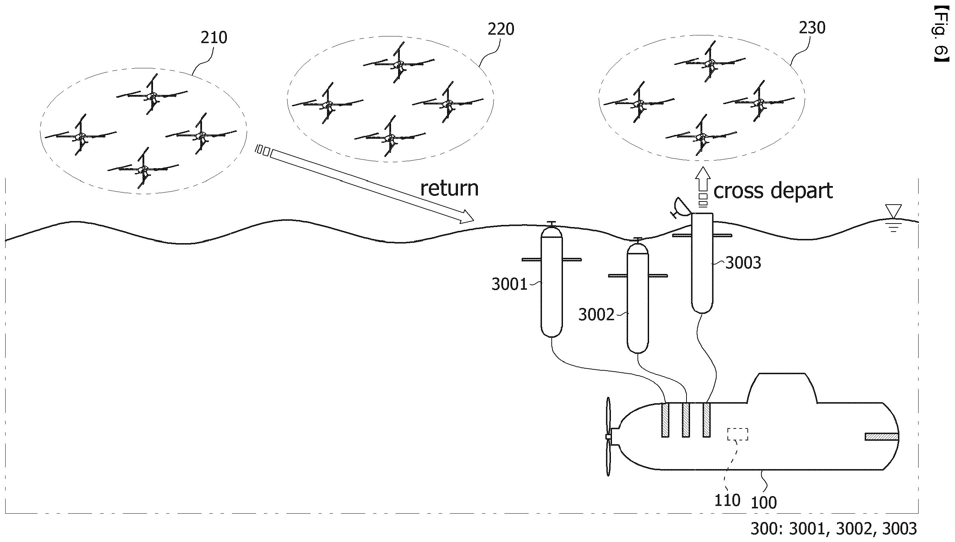

FIGS. 5 and 6 are schematic diagrams for describing a submarine surveillance and reconnaissance system according to an embodiment of the present invention.

Referring to FIGS. 5 and 6, hereinafter, an example in which three capsules 300 (3001, 3002, and 3003) for drones are provided will be described, but the numbers of capsules and drones are not limited.

Meanwhile, one or more drones for which predetermined missions are set may be accommodated inside each of one or more capsules for mounting drones, and missions for some drones among the one or more drones may be different from those for the remaining drones. That is, each of one or more drones for which different missions are set may be accommodated inside each capsule for mounting a drone.

For example, a first group 210 including a plurality of first drones may be accommodated in the capsule 3001 for mounting first group drones, and a surveillance and reconnaissance mission (also referred to as a "first mission") may be set for each of the first drones.

As described above, one or more first drones 210 may be accommodated in the capsule 3001 for mounting first group drones and may depart from the capsule 3001 to the air in an operation area to perform the first mission.

Sonar sensors and optical sensors for performing the first mission may be mounted on the first drones 210 that performs the first mission to collect surveillance and reconnaissance information and location information.

The surveillance and reconnaissance information and location information collected as described above may be transmitted to the control unit 110 of the submarine 100, and sonar and optical signals may be processed in near real time to image and recognize objects.

The submarine 100 may more easily perform commands such as changing operations and the like through the pieces of information transmitted as described above.

Further, accumulated inertial navigation sensor errors of the submarine 100 may be corrected through the location information (GPS information) collected as described above.

Further, a second group 220 including a plurality of second drones may be accommodated in the capsule 3002 for mounting second group drones, and a communication relay mission (also referred to as a "second mission") may be set for each of the second drones.

As described above, one or more second drones 220 may be accommodated in the capsule 3002 for mounting second group drones and may depart from the capsule 3002 to the air in the operation area to perform the second mission.

Communication equipment for performing the second mission may be mounted on the second group (second drones) 220 that performs the second mission to transmit the information collected by the first group (first drones) 210 that performs the mission outside a communication transmission distance with the submarine 100 to the submarine 100 through the second group 220.

Since the second group 220 including the second drones may serve as a communication relay between the submarine 100 and the first group 210, there is an effect of expending a Line of Sight (LoS) of the first group 210.

In particular, since the above-described communication relay is also possible through the antenna 381 provided on the capsules (3001 to 3003) for first to third group drones, the communication relay can be performed more effectively.

In addition, a third group 230 including a plurality of third drones is accommodated in a capsule 3003 for mounting third group drones, and the third group 230 includes drones for cross departure when the first group or the second group returns to the capsule 3003. Therefore, at least any one mission of the first mission or the second mission may be set for the third group.

As described above, in the state in which the one or more third drones 230 is accommodated in the capsule 3003 for mounting third group drones, a battery of any one drone among the first and second groups (first and second drones) runs down, and when the drone returns to any one of the capsules 3001 and 3002 for mounting first and second groups to charge the battery, the third group (third drones) prepared in advance for cross departure may depart to perform the mission.

Therefore, when the third group (third drones) cross departing as described above performs the mission and the battery thereof runs down, any one drone of the first and second groups (first and second drones) having the battery charged may depart, and the third group (third drones) may return again, the battery thereof may be charged, and the third group (third drones) may wait for cross departure.

Meanwhile, the above-described first to third groups (first to third drones) are equipped with a self-destruct function, and thus when the above-described first to third groups (first to third drones) are out of an LoS or cannot return to the capsule 300 for mounting a drone due to insufficient battery power, it is possible for the above-described first to third groups (first to third drones) to self-destruct to avoid detection by the enemy. In particular, it is possible for the above-described first to third groups (first to third drones) to self-destruct on enemy targets as necessary.

As described above, the submarine surveillance and reconnaissance system 10 using the capsules 300 (3001, 3002, and 3003) for mounting drones according to the present invention may allow drones to be jumped from the capsules into the air and transmit collected information and communication signals to the submarine (friendly underwater ship), and thus it is possible to perform smooth and safe operations without the friendly submarine being exposed to an enemy surveillance network.

Further, as described above, there is an advantage in that the surveillance and reconnaissance capability of drones can be improved by transmitting collected information to friendly submarines through an antenna and a drone to which a communication relay mission is set as described above.

In particular, since drones are provided to cross depart, an operational radius can be rapidly expanded, and it is possible to perform efficient navigation, minimize the exposure of friendly underwater ships from danger, and at the same time, correct coordinates and performs communication without the friendly submarines rising to the surface of water, and thus the survivability of the friendly submarines can be enhanced.

According to the present invention, using a capsule for mounting a drone which is launched in water from a submarine, optical information and location information collected from a surface of water and in the air through a drone departing from the capsule, communication signals, and the like can be transmitted to the submarine. Further, it is possible to improve underwater surveillance and reconnaissance capability of a submarine by returning and cross-departing drones as necessary.

That is, the drone departs from the capsule for mounting a drone, and returns to the capsule for mounting a drone after its mission is completed, and thus the drone can be more easily used to perform the mission by charging a battery thereof.

Further, drones are jumped from the capsules into the air and transmit collected information and communication signals to the submarine (friendly underwater ship), and thus it is possible to perform smooth and safe operations without the friendly submarine being exposed to an enemy surveillance network.

Further, there is an advantage in that the surveillance and reconnaissance capability of drones can be improved by transmitting collected information to friendly submarines through an antenna and a drone to which a communication relay mission is set as described above.

In particular, since drones are provided to cross depart, the operational radius can be rapidly expanded, and it is possible to perform efficient navigation, minimize the exposure of friendly submarines from danger, and at the same time, correct coordinates and performs communication without the friendly submarines rising to the surface of water, and thus the survivability of the friendly submarines can be enhanced.

## Claims

1. A capsule(300) for mounting a drone(200) comprising:
a body(310) having a first space(301) for accommodating a drone and a second space(302) provided to surround at least a portion of the first space;
a base portion(320) provided in the first space so that a drone is mounted; and
a valve(340) provided in the body to open or close the second space(302) so that external fluid is introduced into the second space.

2. The capsule for mounting a drone of claim 1, further comprising a charging unit(340) provided in the first space(301) and configured to charge a battery(201) of the drone mounted on the base portion(320).

3. The capsule for mounting a drone of claim 1, wherein the base portion(320) is provided to be able to move up and down in the first space(301).

4. The capsule for mounting a drone of claim 1, wherein the body(310) further includes a cover(380) provided to be opened or closed so as to open the first space to the outside.

5. The capsule for mounting a drone of claim 4, wherein an antenna(351) for communicating with the drone is provided on the cover(380).

6. The capsule for mounting a drone of claim 1, wherein the body(310) further includes one or more control wings (360)provided to be unfolded.

7. The capsule for mounting a drone of claim 1, wherein the body(310) further includes a thrust generating unit(350) for generating a propulsive force under a surface of water.

8. A submarine surveillance and reconnaissance system comprising:
a submarine(100); and
one or more capsules(300) for mounting drones connected to the submarine,
wherein each of the capsules for mounting drones includes a body(310) having a first space(301) for accommodating a drone and a second space(302) provided to surround at least a portion of the first space,
a base portion(320) provided in the first space so that a drone is mounted, and
a valve(340) provided in the body to open or close the second space so that external fluid is introduced into the second space.

9. The submarine surveillance and reconnaissance system of claim 8, wherein one or more drones(200) to which predetermined missions are set are accommodated inside the one or more capsules for mounting drones, and
some drones of the one or more drones have different missions from remaining drones.

10. The submarine surveillance and reconnaissance system of claim 8, wherein the body(310) is connected to the submarine through a cable(370), and
the cable includes a communication line(371) and a power line(373).

11. The submarine surveillance and reconnaissance system of claim 8, wherein the capsules(300) for mounting drones are accommodated inside the submarine(100) or provided to be discharged to an outside of the submarine(100).

12. The submarine surveillance and reconnaissance system of claim 11, wherein the body(310) further includes a thrust generating unit(350) for generating a propulsive force under a surface of water, and
the thrust generating unit(350) is provided to operate when the capsules for mounting drones are discharged to the outside of the submarine.

13. The submarine surveillance and reconnaissance system of claim 11, wherein the body(310) includes one or more control wings(360) provided to be unfolded,
the control wings(360) are provided to be selectively unfolded as necessary when the capsules(300) for mounting drones are discharged to the outside of the submarine(100), and
the body(310) is maintained level through the control wings(360) so that only an antenna(381) is exposed on the surface of water when the capsules for mounting drones are discharged to the outside of the submarine and the drone is separated from the capsules for mounting drones.

14. The submarine surveillance and reconnaissance system of claim 11, wherein, when the capsules(300) for mounting drones are recovered to the submarine(100), the valve(340) is opened and water is introduced into the second space(302).

15. The submarine surveillance and reconnaissance system of claim 11, wherein the body(310) further includes a cover(380) provided to be opened or closed so as to open the first space(301) to the outside,
an antenna(381) for communicating with the drone(200) and the submarine(100) is provided on the cover(380), and
the body(310) is maintained level through the control wings(360) so that only an antenna(381) is exposed on the surface of water when the capsule(300) for mounting drones is discharged to the outside of the submarine(100) and the drone(200) is separated from the capsule for mounting drones.
